# EUROPEAN PATENT SPECIFICATION

(11) **EP 1 224 545 B1**
(45) Date of publication and mention of the grant of the patent: **22.08.2007**
(21) Application number: 99960427.5
(22) Date of filing: 17.11.1999
(51) Int. Cl.: G06F 9/46

(54) **A MULTIPLE CUSTOMER AND MULTIPLE LOCATION PC SERVICE PROVIDER SYSTEM**
SYSTEM ZUM BEREISTELLEN VON PC-DIENSTEN AUS MEHREREN NIEDERLASSUNGEN FÜR MEHRERE KUNDEN
SYSTEME FOURNISSEUR DE SERVICES INFORMATIQUES COMPRENANT PLUSIEURS CLIENTS ET PLUSIEURS EMPLACEMENTS

(30) Priority: 30.09.1999 US 408598
(43) Date of publication of application: 24.07.2002
(60) Divisional application: 06016351.6
(73) Proprietor: Automated Business Companies, Irving, TX 75062 (US)
(72) Inventor: FREENY, Charles, C., Dallas, Texas 75243 (US)
(74) Representative: Ebner von Eschenbach, Jennifer
(86) International application number: PCT/US1999/027252
(87) International publication number: WO 2001/025916

(56) References cited:
- US-A- 5 771 354
- HALFHILL T R: "Good-bye GUI. Hello, NUI" BYTE (INTERNATIONAL EDITION), JULY 1997, MCGRAW-HILL, USA, vol. 22, no. 7, pages 60-64, 66, 68, 70, 72, XP002142711 ISSN: 0360-5280
- HALFHILL T R: "Part 1. Cheaper computing" BYTE (INTERNATIONAL EDITION), APRIL 1997, MCGRAW-HILL, USA, vol. 22, no. 4, pages 66-70, 72, 74, 76, 78, 80, XP002142712 ISSN: 0360-5280
- ANONYMOUS: "Remote Security Anchoring of Remote User Identification" IBM TECHNICAL DISCLOSURE BULLETIN, vol. 30, no. 12, 1 May 1988 (1988-05-01), pages 30-33, XP000023374 New York, US

## Description

### Background of the Invention

Currently, and in the past, an individuals personal computer (PC) could only be accessed via a network using specialized software such as PC Anywhere, windows dial up networking, or a client server system which has a limited number of station locations. This requires very specialized software at both locations along with periodic maintenance at both locations. The worst part of this situation is that each individual is responsible for upgrading, both his hardware and software. The PC obsolescence rate is approximately every eighteen months and is not expected to change in the next twenty years. Both of these problems make using a personal computer very time consuming (low productivity) and location restrictive (inconvenient) at best.

The two current basic solutions to these PC problems revolve around (a) the portable computer and (b) the attempt to expand and simplify client/server systems.

The portable computer industry has grown rapidly to try and eliminate the location restrictions, but portable PC machines suffer from the same obsolescence problems along with another major inconvenience. That of having to carry a computer when traveling and batteries etc.

The solution by the so called "thin client" PC networks is to connect inexpensive PC's (referred to as thin clients) to a company network so employees do not have to maintain as many files at their locations. Such approaches are practical for the work place where many files are shared, but not for the individuals Personal Computer where no files are shared.

As described in "Part 1. Cheaper computing", Byte, vol. 22, no. 4, p. 66-80 (April 1997), thin clients have applications which run remotely on a multiuser server network computer while the client machine handles only the graphics locally. Thin clients are "stateless" machines that rely on servers to store all volatile data and software. Thin clients work best when users work with a limited set of programs, when users share desktops, or when remote users are difficult to support. Thin clients are not well suited for users who need lots of local processing power, who frequently need to install new software, who use a variety of peripherals, or who do not have access to a network that is fast enough to run network-centric applications.

Another solution described in U.S. Patent No. 5,771,354 is an Internet online backup system which provides remote storage for customers using IDs and passwords which were interactively established when signing up for backup services. A customer computer connects to an online service provider computer by phone, Internet, or other method, pays a fee to said service provider, and obtains additional processing and storage resources for the customer's computer. The resources can take the form of virtual storage and processing capabilities. The additional resources made available to the customer computer can be used either to enhance the customers' local needs (such as access to virtual storage for additional disk space, or access to a more powerful processor of similar type for program execution), or these additional resources can be used by the customer computer to support services on-line.

### Summary of the Invention

The present invention is a multi-customer computer service system that solves the existing obsolescence and inconvenience problems in a different manner.

The present invention relates generally to a system designed to provide an unlimited number of individuals to be connected to a PC computer service provider simultaneously using a variety of existing predetermined customer interface units such as existing PC's running on DOS, OS2, Win95/98, MacOS, NT OS, and the new "Multi-Mode Multifunction Information Management Systems" as they incorporate the PC into single housings being shared by many multiple machines. The individual can be connected from any location (office, home, a friends house, a hotel and from any foreign country), and have their PC GUI (Graphical User Interface) down loaded and appear just as it was, the last time the individual signed off on that particular type of machine. In addition all of the individuals' database and files are decoded and made available just as if they were stored on a PC located at the individuals current log in location. In essence, the current invention combines server methods in use today with advances in microprocessor technology to design a server system that can provide the individual their own PC upon demand from virtually any location without the maintenance and update headaches of today's PC's.

The present invention is a multi-customer computer system, which can be implemented by a service provider such as AOL, MSN, or even a communications company such as World Comm, Inc. A system, such as the one described herein would shift the awful burden of keeping ones PC current in both software and hardware (2 year upgrades) to a service provider, and at the same time, free the customer from location restrictions. Also, the service provider can inform the computer user of software updates and new applications, which can be provided as part of the service for a small fee. Even more important the individual does not have to take the new software updates unless they wish (not the case with existing network systems that supply software upgrades). The service provider can maintain many versions of the same software because of the huge economy of scale involved. To see the economic impact of the present invention the following examples are provided.

Current average customer cost to keep hardware updated is $750.00 per year (not including printers and storage devices), but including customers' time to update. Current average customer cost to keep software updated is $250.00 per year counting new applications and customers' time. Thus, the average computer user will spend $1,000.00 per year to keep updated (Worldwide, this represents $800 billion dollars per year in just hardware, software, maintenance and upgrade sales for the personal computer industry in today's market.).

In the system described, a service provider such as AOL, could charge $20.00 a month (they currently charge $20 a month for e-mail and Internet services) for PC service, and pay for the system described in three years plus pay for operational costs and make a profit. This would amount to an annual saving of 75% to the individual. In addition, the number of computer users would quickly rise and offset, to a large degree, the drop in industry hardware and software manufacturing requirements. The requirements are much lower because the current invention allows the service provider to only pay royalty fees when the software is in use (Shannon's Law). The hardware sales requirements would also be reduced because of the same Shannon's law. The service provider for example, can share PC engines (CPU's), software (both operating system and application), fast memory (RAM), permanent memory (Hard Drives) with a number of customers and move permanent storage to Tape/CD units until a customer logs back onto the system and needs their personal database on line. These types of tremendous Shannon Law savings in resource cost, including the sharing of technicians and PC real estate will yield a much more orderly expansion of the PC industry in the future.

Thus, the system described in this invention provides the means to bring both the convenience and affordability to all persons wanting the advantage of personal computers and would shift the present customer burden of PC upgrades to the service industry. At present, the computer companies such as Compaq, Intel, Microsoft, Sun Micro Systems and Cisco are addressing the obsolescence, convenience and cost problems mentioned above, by lowering the hardware cost through continued developments and using the emerging Web/TV system to eliminate the need for displays at home. However, these are variations on the same old industry approach to progress in which the customer still is left with the annual obsolescence and daily location convenience problems of his personal computer. Until eliminated or substantially reduced, the problems mentioned will keep many people from ever trying to become computer literate than otherwise might be the case.

The invention described in this Patent, really opens up the possibility for major changes in education, and would allow every child with a TV (Web/TV) to have a computer. This could be at school, at home, or any place else (friend's house, hotel, foreign country, etc.) the child happened to need access. Once the "Rent a PC" system described in this invention is implemented it will allow the Internet service providers to expand and provide personal computers to their customers along with the many other services they are providing today. The companies that are successful in implementing the system described in this invention will probably end up giving each customer their home customer interface unit as a part of the monthly service charge, just as cable companies do now to connect their customers to selected cable TV channels. A candidate for such a home/office machine is the Multi-mode Multifunction Information Management System (MIMS) described in a co-pending patent application submitted by the author. The system described in this invention is only practical because of the recent technical advances listed below, or the small number of operating systems and application programs required and most of all because the service provider industry wants customers.
1) CPU speeds rapidly approaching 1 GHZ
2) Solid State memory size and cost reductions near $.1/MB
3) Hard Drive capacity, speed and size reduction near $.01/MB
4) The Internet & communication/software infrastructure
5) Modem speed, number of lines, and line bandwidth increases
6) Less than ten PC OS used in roughly 95% of PC's
7) Less than 50 PC application programs service 90% of the users
8) The new Service Provider industry needs customers and new services

That is, it would not have been practical to consider a true PC worldwide server system in the past because the technological infrastructure was not available, the delivery of information was very expensive, and the computer Service Provider Industry never developed beyond small niche database or accounting services.

### Brief Description of the Several Views of the Drawings

FIG. 1 is a diagrammatic view of the multi-customer computer service system of the present invention.

FIG. 2 is a view of two basic sub elements, which would typically be associated with the customer interface units shown in FIG. 1.

FIG. 3 is a view of the Computer Service Control Unit, shown in FIG. 1.

FIG. 4 is a view of the Computer Service Provider multiple computer sub system shown in FIG. 1.

FIG. 5 is a function diagram for software required of the system in FIG. 1.

FIG. 6 is a typical start up computer interface menu.

### Description of the Preferred embodiment

The term "multi customer" as used herein means that a large but unspecified number of customers are serviced by the PC server system described herein. An example of the preferred embodiment would be an Internet service provider operating much like a phone or cable company, in which a large number of customers can be connected from a large number of different locations to a large number of PC's, at a specific location.

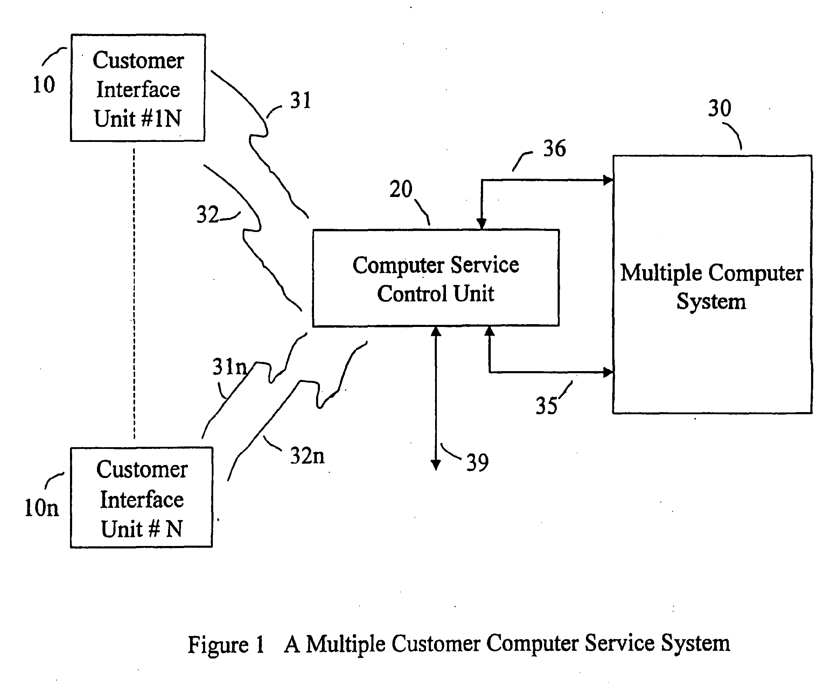

Shown in FIG. 1 is a multi customer computer service system (MCCSS) 5 which is constructed in accordance with the present invention. In general, the MCCSS 5 of FIG. 1 has at least one (1) computer service control unit CSCU 20, connected to at least two (2) customer interface units (CIU 10) via at least one (1) modem connection 31, and possibly two modem connections 31, 32 depending on the speed (bandwidth) of the individual modems. In general, the CSCU 20 is constructed to interrogate each new CIU 10 connection via a browser for example and receive a request for service from the customer interface unit (CIU) 10 via line 31 in which the interrogation response contains information about the customers Interface Unit CIU 10. The CSCU 20 could be a standalone PC Service provider with connections to the Internet, company intranets, the regular phone system and maintain it's own Multiple Computer Systems ("MCS") unit 30 or have connections to other service provider systems that have been approved by the owner of the MCS 30 such as AOL that has multiple tier connections around the world to be the customer service control unit CSCU 20. The preferred embodiment is for many Internet service providers and large companies to maintain their own CSCU 20 along with their own MCS 30 in order to simplify having to hand off the actual PC service once the customer has logged onto the service.

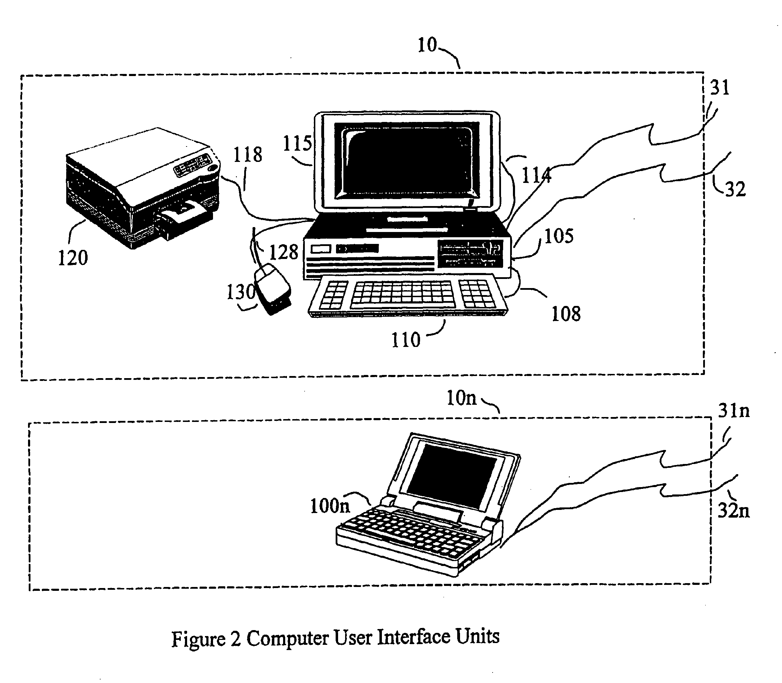

Once the customer CIU 10 is connected to the CSCU 20, the customer information is either a new customer service information, or is simply an old customer already assigned a personal identification number (PIN) asking to be connected to their personal computer located within the service centers multiple computer systems (MCS) 30, via line 35, or to one of the customer's computers located at another location via line 39 (see FIG. 2). In response to the CIU 10 requesting the multiple computer systems 30 computer service, the CSCU 20 either establishes a new customer account, or connects the CIU 10 to the MCS 30 via line 36 when an encrypted valid PIN is received. The MCS 30 first downloads a program to the CIU 10 to determine the CIU 10 configuration and possibly, a more sophisticated browser, for example, than that used in the original automatic interrogation when the CIU 10 was first connected to the CSCU 20. The down loaded program evaluates the CIU 10 in a manner similar to that used by software installation programs such as that used by PC anywhere to determine the computer system configuration or most any new software program that needs to know all of the basic information about the CIU 10 regarding modem type and speed, printer type, browser type and version. The preferred embodiment of this downloaded program is that used by all operating systems set up programs used to determine the target computer configuration modified to determine additional factors such as modem speed, and display capability in order to determine if the existing CIU 10 connection is one of the predetermined configurations acceptable by the MSC 30 unit. This is required since the customer is free to use any predetermined CIU 10 configuration located any place in the world at anytime. The only requirements for a CIU 10 unit is to be recognized by the MCS 30 is that it have a predetermined number of communication, customer interface elements to be discussed in more detail in connection with figure 2. Once the MCS 30 establishes the configuration of the CIU 10, the MCS 30 down loads the customer's personal computer information file (PCIF) to the CIU 10, which causes the CIU 10 display to appear as the last time the customer used their computer before being stored in the MCS 30 at shut down. The CIU 10 display is modified only by changes caused by the difference in the last CIU 10 unit used by the customer, and the one currently being used to access their PC.

This feature, of being able to call up one's own personal computer (just like a person left it the last time used) from anywhere in the world, using any PC or Web/TV is what makes the system so significant. In fact, once the Personal Computer Industry is converted to a service industry, individuals will be able to use their computers almost any time or any place. Public CIU 10 terminals in airports, malls, and hotels will be as common as public phone booths are today, and at about the same cost (i.e. CIU 10's will be the phones of tomorrow).

If the customer requested the CSCU 20 to connect them to their (or anybody else in which they had the phone number or authorization code if required) computer at home, office. etc., the connection would be made via line 39 and in these cases the initial information displayed at the CIU 10 would be that provided by the "special" computer requested by the customer. This would, in essence, bypass the use of the customer's PC stored in the MCS 30 unit. For many years this will certainly happen often, since many customers will still want their own "personal" system at home and/or office in addition to a service provider PC. That is, it is anticipated that the PC service computer described herein will initially be used in addition to the customer's home or office PC and will be used to extend the obsolescence period of existing PC systems. As customers convert over to the advanced computers and software available with service center PC's, to maintain anything other than displays, keyboards, mouse, printer and fax at home will more than likely decrease. To connect the customer to special PC's at locations other than that of the MCS 30, the CSCU 20 would either, provide the software to connect the CIU 10 with the required special computer via line 39, or just allow the modem connection 39 connected to 32 to be made and allow the CIU 10 to perform the required communication without intervention from the CSCU 20 (e.g. operate just like PC anywhere software was loaded on both the CIU 10 machine and the special PC machine).

The CIU 10 is further described in connection with figure 2 where unit 10 and unit 10 n are shown to depict that the MCCSSC 5 can work with multiple type CIU 10 units, for the sake of clarity only the more complicated CIU 10 unit 10 will be described. Whenever the customer has a display unit 115 such as a Packard Bell model 1412 SL connected via line 114 to a Computer Service Center Interface, and local control unit 105, (which could be a PC unit such as a Packard Bell platinum pro 650), which has an internal modem connected to line 31 and keyboard 110 connected via line 108 and mouse unit 130 connected via line 128, connected to a printer unit 120 such as and HP model 820c via line 118 then such a configuration is for example qualified and an appropriate CIU 10 predetermined CIU file is placed in the configuration files of the MCS 30 memory unit and the MCS 30 matches this file with the information provided to the MCS 30 when the customer logs into the service provider to use their PC from that same location or same type configuration at a different location. The CIU 10 just described could be located at the customer's home, office, friend's house, hotel, mall, or airport in any city or country. The customer for example could log onto an internet service provider and could click the mouse arrow on the computer service icon (not shown in figure 2) for example and the computer service icon screen would appear and give the customer several options to select from. As a minimum the options available to the customer are a) new customer, b) service computer and c) other computers. If the new customer (option a) is selected the next menu collects the necessary information to identify the new customer (name, address, phone, etc.) plus payment information. Upon completing the new customer form the data is submitted to the CSCU 20 via line 31 and upon acceptance by the CSCU 20 a personal password, (such as a Personal Identification Number (PIN)) is given to the new customer to use in the future. In addition, new customers are asked what personal computer application software they would like to have available (e.g., Word Perfect, D base IV, Lotus, Excel, etc.) and if they would like to up load any one of their specialized programs and data bases into their new MSC 30 PC systems memory. This would allow them to have access to their existing PC data and programs plus software they do not have loaded on their own computer. If the service computer (b) option is selected the menu which appears, asks for the customer pin. Upon providing the PIN a connection by the CSCU 20 unit is made to the MSC 30 via line 35. A disconnection is made, if a valid pin number can not be established between the CIU 10 and CSCU 20, after a certain number of attempts.

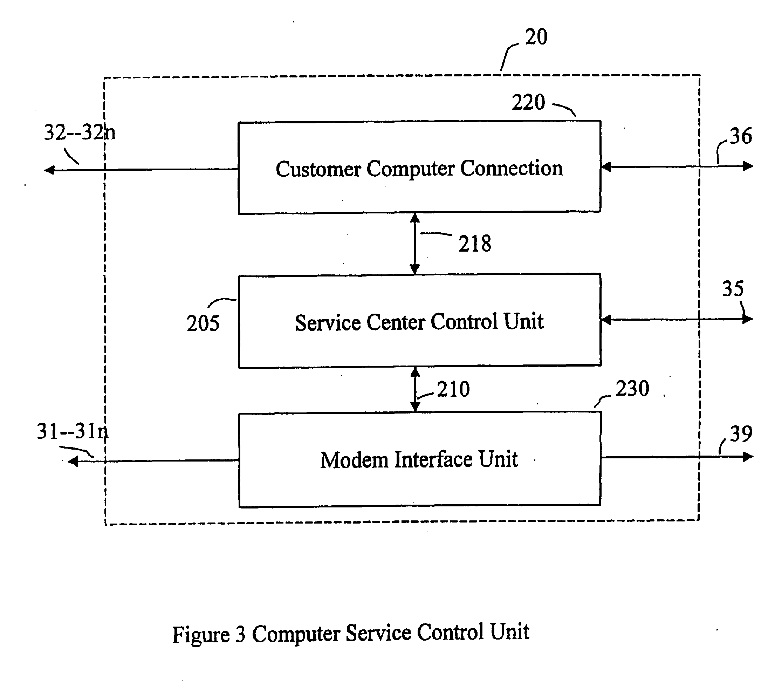

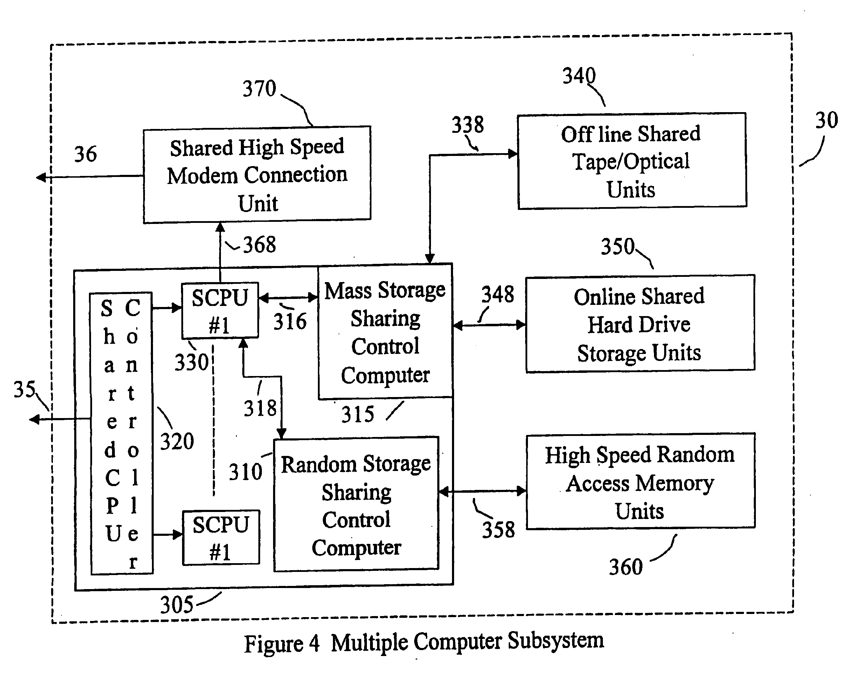

In connection with FIG. 3, the CSCU 20 is further described to have a modem interface unit (MIU) 230 which controls all of the modems of the CSCU 20 (this might be 10 to 200 thousand) which, connects to line 31 connected to the CIU 10. The MIU 230 is connected to the service center control unit (SCCU) 205 via line 210, which has all of the controls and software required to maintain the customer data base with PIN numbers and is responsible for monitoring the payments of each customer to keep their PIN valid or make invalid if payments are not received. This would also be the unit that maintained administrative and the account close out software and would be the way customers were notified that payments were not received, or when new software was available, and other such information and promotional messages could be provided by the service provider. Such messages would be given each time the customer was connected with a valid PIN or the customer could choose to not have any promotional materials provided such as done automatically by most ISP's today. The SCCU 205, also activates the customers service center PC by giving the MSC 30 via line 35 the customers pin. At this point, the MSC 30 takes over and the MIU 230 connection is transferred to the customer computer connection (CCC) 220 if required by the SCCU 205 via line 218. This transfer between the MIU 230 to the CCC 220 is done in the software in order to hand off administration tasks to the MSC 30 controller unit 370 and unload the SCCU 205 unit. The time of connection is noted by the MSCCU 305 shown in figure 4 which is an element of the MSC 30 unit and which is comprised of a shared CPU control unit (SCPUCU) 320 which controls the sharing of the available SCPUS 330 connected via 328.

The SCPU 330 are in turn connected to the mass storage sharing control computer (MSSCC) 315 via line 316 and to the random storage sharing control computer (RSSCC) 310 via line 318. The MSCCU 305 is also connected to the shared high speed modem connection unit 370 via line 368, which in turn is connected back to the CIU 10 via line 36 to unit 220 and line 32. Note that in the cases where line 31 has all of the required band width, there is no requirement for lines 32 and 36 or units 370 and 220. However, they are included in the preferred embodiment because at the present time PC modems are running between 28 KBS and 10 MBS. As a practical matter, the modem speed needs to be greater than 128 KBS for good performance. By the time service centers are in operation the average modem speed probably will be greater than the 128 KBS. Also, when cable modems are used in downloading (Web/TV systems) line 32 can represent the high-speed cable modem and the line 31 can represent the slower speed up link or phone modem connection. Consequently, for clarity purposes, the up link will refer to line 31 and the down-link to lines 36 and 32 to denote that plenty of band width is available to communicate between the customers CIU 10 and service centers MSCCU 305. Communication switches such as the Cisco series IGX 8400 or more advanced BPX 8600 series switches will handle the required speeds for both the IP connected service providers and the company intranets plus the legacy phone connections.

The MSSCC 315 is connected to an on line shared hard drive unit (SHDU) 350 such as a raid 1 system from Adaptec to insure reliable backed up on line operation via line 348 and an off line shared Tape/CD ROM unit (STU) 340 via line 338 such as an Alpha Systems model 2000 or Brothers International unit with back up for each customer set of files. The backed up offline customer data system is maintained as if the system was storing a hard drive for each customer and the data is secured using a Public Key Infrastructure (PKI) type system such as those available from IBM, Cybertrust or GTE. It is assumed through out this description that the data integrity is maintained from input to the CSCU 20 unit to the output back to the CIU 10 unit via PKI system that is incorporated into and made a part of the customers PIN, or other suitable encryption system. When a customer first logs on to the CSCU 20 the MCS 30 transfers the customers data base from the STU 340 to the SHDU 350 via lines 338 and 348, controlled by the MSSCC 315. Also the MSCCU 305 via the SCPUCU 320 selects one of the SCPUs 330 to serve this request (note that depending on the speed of the SCPU'S 330 up to 10 customers might be serviced (time shared) by the same SCPU 330). Also, the SCPU 330 selected for the customer asks an RSSCC 310 memory computer for the customer requested computing tasks in the high speed random access memory unit (RAMU) 360, via line 358. After selection of the SCPU 330 and transferring the customers data base and programs menu from the off line shared tape/CD ROM unit 340 to the on line shared hard drive unit 350 and after allocating enough Ram in the high speed random access memory unit 360 the required elements of the customer's PC is in essence, assembled.

This assembled group of elements will then operate the customers dedicated PC, and be connected directly to the customer's CIU 10 via lines 31 and 32 until all of the customers screen requests are completed. This completion indication can be caused by a) inactivity for a pre-selected number of minutes, b) the CIU 10 unit is turned off or c) the customer indicates completion by shutting down the computer, for example, with a click of the "finished" icon. Once the customer's CIU 10 is disconnected the SCPU 330 selected, causes the last know configuration information regarding all of the PC files to be stored in the off line storage system 340 in a manner for example similar to that commonly done by two major PC operating systems (Microsoft windows and the Apple computer operating systems) modified to treat the customer data in and encrypted manner. Thus, the customer's last known PC configuration is ready to be reloaded the next time the CSCU 20 is contacted.

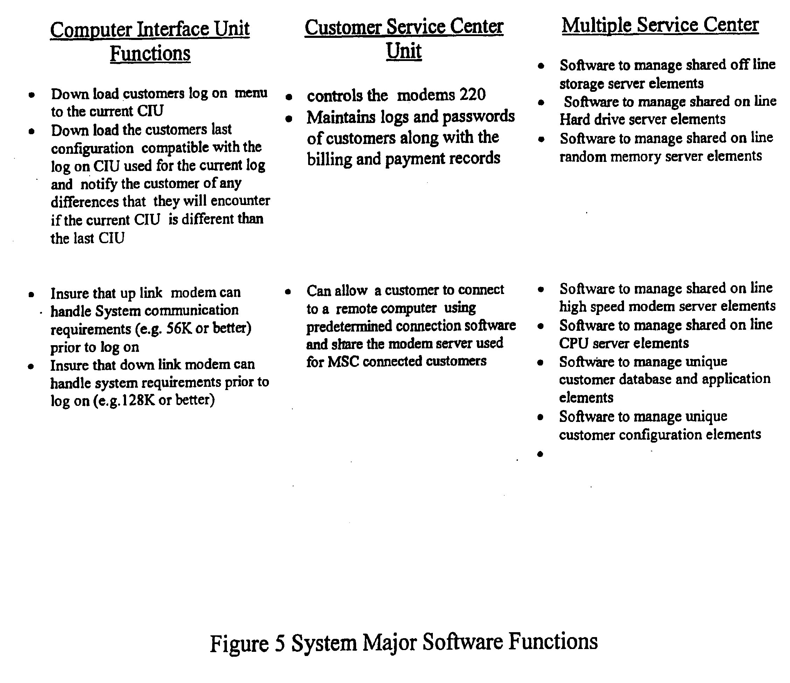

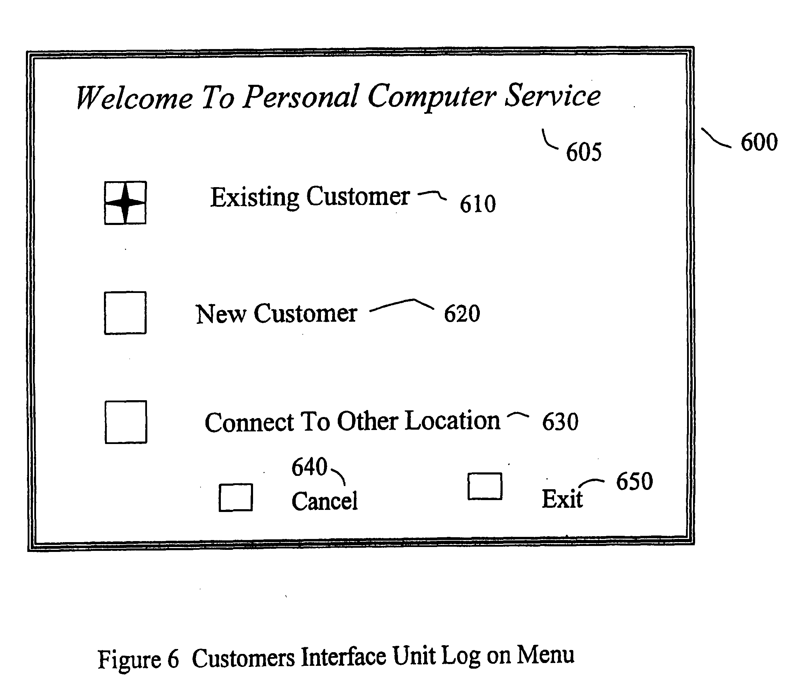

Referring to FIG. 5, the functional steps that are required by the invention's software is depicted. Except for the MSCCU 305 each of the software functions described in figure 5, can be accomplished by using visual basic 5 development software by persons skilled in the art or any of the other server software consistent with the controllers being used in 310, 320, and 315. These functions would preferably be done in such a manner that a menu 600 presented to the customer when first making a connection would look something like that shown in figure 6. For example, the menu 600 may be provided with a heading 605, and choices for the customer to select, such as an existing customer choice 610, a new customer choice 620, a connect to other location choice 630, a cancel choice 640 or an exit choice 650. Once the customer makes a selection then the software provided to perform the remaining functions controls the CIU 10 screen.

The most sophisticated piece of software is that associated with managing the MCS 30 units, and MSCCU unit 305. The software associated with this part of the system is available from Client/server developers, such as Sun Micro systems, Microsoft, Cisco and IBM. These software systems manage large number of enterprise computer networks to connect computers (up to 20,000) located through out the world for large corporations to inter company resources referred to as INTRANETS. With small modifications, known to those skilled in the art, this multi services management software can be used for managing up to several million PC customer hard drives PC configurations and several thousand sets of PC hardware subsystem elements along with PC customer private databases from one location. In fact, the problem becomes easier at one location because communication delays associated with large INTRANETS which span the globe connecting PC's have the individual communication delays which must be considered. These delays are virtually eliminated with the service provider approach because the PC's (i.e. the SCPUS 330) are all at one location. Only the "finished" information needs to be sent to the Customer after the computational or data lookup process is completed by the PC (SCPU 330) at the service center (i.e. MCS 30). The system message server and modem server software can easily handle this part of the overall service task. The process is similar in concept to the old (and current) mainframe computers that could be accessed from Dumb Terminals and their processor and memory shared with several individuals simultaneously. However those systems never even attempted to maintain specialized, terminal, database, and application configurations for separate customers in order to be able to reproduce an individuals computer in the configuration it was last used. Client/Server systems such as Microsoft's NT5 latest version try to provide all of the services that they envision (i.e. remote access servers, databases servers, E-mail servers, modem servers, printer servers, application servers, Internet servers, etc) the individual might need except for the individuals PC itself. The current invention does not preclude the individual from using these other type client/server systems. In fact, it makes it much easier to access shared database and E-mail services located at the same location as the PC rather than a company trying to build their own global network for such services. That is, homes and companies would only need a single Multi-Mode Multifunction Information Management System(MIMS) machine (i.e. CIU 10 units that have phone, E-mail, paging, fax, copy, printing, typing, scanning, display, keyboard, mouse, disk storage, USB ports for other digital machines such as cameras, in a single housing unit), having essentially the same footprint as workstation computers have today. Such a MIMS CIU 10 is described in a co-pending application submitted by the author of this invention.

Also, worry about data security, would be much less of a problem in the current invention for the following reas4ons. (a) The number of individuals with physical access to the individuals databases would be greatly reduced. (b) The encryption power would be significantly greater than today because the speed of the PC CPU would be 2 to 3 times faster and password codes could be much longer such as data, finger and voice prints all being required to generate an access password.

In summary the PC hardware/software server system described to build a service provider PC rental system or to replace an existing client/server and/or mainframe server networks is much more efficient. By way of example, a one gigabyte 64 bit bus system could allow one PC CPU to service 1000 PC customers on line simultaneously if PC/Server resource management software were adapted to manage the PC subsystem elements from the existing client/server software as suggested above. Thus 1000 PC CPU's , RAM's, and HARD DISKS configured in the hardware server manner described in this invention could service 100,000 to 1,000,000 customers simultaneously. Also, the real estate for each of the 1000 PC hardware subsystem elements ( CPU's, RAM, etc) would be about 1/1000 of a normal PC unit housing all the required subsystem elements. For example the PC CPU server would probably contain 100 1 Ghz advanced Pentium class CPU's per 8"by19"by24" housing. Similar economies of scale would readily be achieved with RAM/Servers and Hard Drive/Server designs.

Considering the achievable worldwide savings in storage requirements alone is astounding. Consider that current PC storage usage is typically 1000 parts for operating system/application programs for every 1 part of useful customer data storage (a conservative estimate), and that a Shannon Law gain of one thousand is achieved with the Hard Disk PC/Server system described in this invention. Then only one millionth of the number of Hard Drives in existence would be needed to service the current number of PC customers. Such changes in the PC industry future are of great benefit to the individual when both PC cost and personal time are considered.

Changes may be made in the construction and operation of the various elements described herein or in the steps or sequence of steps of the methods described herein without departing from the scope of the invention as defined in the following claims.

## Claims

1. A multiple customer service system (5), comprising: a plurality of predetermined types of customer interface units (10), each of the customer interface units (10) being remotely disposed from the other customer interface units (10), at least two of the customer interface units (10) being of a different type and each of the customer interface units (10) capable of transmitting an encrypted personal password uniquely identifying a customer operating the customer interface unit (10); a multiple computer system (30) disposed remotely from the customer interface units (10), the multiple computer system (30) comprising: a plurality of central processing units (330) capable of being shared selectively and selectively processing data using a plurality of predetermined operating system programs with at least one application program being made to operate with at least one of the predetermined operating system programs; a plurality of shared multiple storage units (340, 350, 360) in communication with the selectively shared central processing units (330), the shared multiple storage units (340, 350, 360) storing at least one application program selectable by each of the customer interface units (10) supplying a valid encrypted personal password, and the shared multiple storage units (340, 350, 360) storing a plurality of sets of customer data and customer programs with each set of customer data and programs only being accessible by a valid encrypted personal password whereby each set of customer data and programs are accessible by only the customer uniquely identified by the valid encrypted personal password; and a shared CPU control unit (320) communicating with the selectively shared central processing units (330) upon request by a customer operating one of the remotely located customer interface units (10) to simulate a personal computer from the point of view of the customer operating the remotely located customer interface unit (10) and communicating data and programs uniquely associated with the customer supplying the valid encrypted personal password; and
a computer service control unit (20) located remotely from the customer interface units (10), the computer service control unit (20) communicating with the customer interface units (10) and being constructed to determine if the customer interface unit (10) is one of a predetermined type and to receive requests for service from the customer interface units (10) of the predetermined type with each request for service including a predetermined type of encrypted personal password uniquely identifying a customer utilizing the requesting customer interface unit (10), the computer service control unit (20) selectively establishing communication between the shared CPU control unit (320) of the multiple computer system (30) and respective ones of the customer interface units (10) upon verification of a valid encrypted personal password of the customer requesting the service.

2. A multiple customer service system (5) as defined in claim 1, further comprising means for signing up a new customer.

3. A multiple customer service system (5) as defined in claim 1, further comprising means for connecting a customer interface unit (10) to a computer separate from the multiple computer system (30) upon request by the customer.

4. A multiple customer service system (5) as defined in claim 1, wherein the customer interface units (10), the computer service control unit (20), and the shared CPU control unit (320) communicate over the internet.

5. A multiple customer service system (5) as defined in claim 1, further comprising means for detecting service completion for each customer interface unit (10) having established communication with the shared CPU control unit (320).

6. A multiple customer service system (5) as defined in claim 5, wherein the shared CPU control unit (320) includes means for storing the last configuration of the customers data and programs offline when service completion is detected.

7. A multiple customer service system (5) as defined in claim 6, wherein the shared CPU control unit (320) includes means for transferring the customers last configuration of the customers data and programs to on line status when a valid password is detected.

8. A multiple customer service system (5) as defined in claim 1, further comprising means for notifying the customer regarding at least one of service payment delinquency and new software availability.

9. A multiple customer service system (5) as defined in claim 1, further comprising means for the customer, the customer service control unit (20), and the shared CPU control unit (320) to have encryption key codes so that communication therebetween is private and the shared CPU control unit (320) can never unlock the customers data and programs.

10. A multiple customer service system (5) as defined in claim 1, wherein the shared CPU control unit (320) includes means for detecting service completion for each customer interface unit (10) having established communication with the shared CPU control unit (320), and for storing the last configuration of the customers data and programs when service completion is detected.

11. A multiple customer service system (5) as defined in claim 10, further comprising means for signing up a new customer.

12. A multiple customer service system (5) as defined in claim 10, further comprising means for connecting a customer interface unit (10) to a computer separate from the multiple computer system (30) upon request by the customer.

13. A multiple customer service system (5) as defined in claim 10, wherein the customer interface units (10) and the computer service control unit (20) communicate over the internet.

14. A multiple customer service system (5) as defined in claim10, wherein the shared CPU control unit (320) includes means for transferring the customers last configuration of the customers data and programs to off line status when service completion is detected and transferring the customers last configuration of the customers data and programs to on line status when a valid password is detected.

15. A multiple customer service system (5) as defined in claim 10, further comprising means for notifying the customer regarding at least one of service payment delinquency and new software availability.

16. A multiple customer service system (5) as defined in claim 10, further comprising means for the customer, the customer service control unit (20), and the shared CPU control unit (320) to have encryption key codes so that communication therebetween is private and the shared CPU control unit (320) can never unlock the customers data and programs.

17. A multiple customer service system (5) as defined in claim 10, wherein the central processing units (330) are personal computer central processing units running a personal computer operating system.

## Patentansprüche

1. Servicesystem für mehrere Kunden (5), wobei das System folgendes umfasst: eine Mehrzahl vorbestimmter Arten von Kundenschnittstelleneinheiten (10), wobei jede der Kundenschnittstelleneinheiten (10) von den anderen Kundenschnittstelleneinheiten (10) entfernt angeordnet ist, wobei mindestens zwei der Kundenschnittstelleneinheiten (10) anderer Art sind, und wobei jede der Kundenschnittstelleneinheiten (10) in der Lage ist, ein verschlüsseltes persönliches Passwort zu übermitteln, das einen Kunden, der die Kundenschnittstelleneinheit (10) bedient, eindeutig identifiziert; ein Mehrfachcomputersystem (30), das entfernt von den Kundenschnittstelleneinheiten (10) angeordnet ist, wobei das Mehrfachcomputersystem (30) folgendes umfasst: eine Mehrzahl von Zentraleinheiten (330), die selektiv gemeinsam genutzt werden können und die selektiv Daten unter Verwendung einer Mehrzahl von vorbestimmten Betriebssystemprogrammen verarbeiten, wobei mindestens ein Anwendungsprogramm mit mindestens einem der vorbestimmten Betriebssystemprogramme funktionsfähig ist; eine Mehrzahl von gemeinsam genutzten Mehrfachspeichereinheiten (340, 350, 360), die sich in Übertragungsverbindung mit den selektiv gemeinsam genutzten Zentraleinheiten (330) befinden, wobei die gemeinsam genutzten Mehrfachspeichereinheiten (340, 350, 360) mindestens ein Anwendungsprogramm speichern, das durch jede der Kundenschnittstelleneinheiten (10) durch Bereitstellen eines gültigen verschlüsselten persönlichen Passworts ausgewählt werden kann, und wobei die gemeinsam genutzten Mehrfachspeichereinheiten (340, 350, 360) eine Mehrzahl von Kundendatensätzen speichern, und wobei auf jeden Kundendatensatz und jedes Programm nur durch ein gültiges verschlüsseltes persönliches Passwort zugegriffen werden kann, wobei auf jeden Kundendatensatz und jedes Programm nur durch einen durch das gültige verschlüsselte persönliche Passwort eindeutig identifizierten Kunden zugegriffen werden kann; und eine gemeinsam genutzte CPU-Steuereinheit (320), die mit den selektiv gemeinsam genutzten Zentraleinheiten (330) auf Anforderung durch einen Kunden kommuniziert, der eine der entfernt angeordneten Kundenschnittstelleneinheiten (10) bedient, um aus Sicht des Kunden, der die entfernt angeordnete Kundenschnittstelleneinheit (10) bedient, einen Personalcomputer zu simulieren, und wobei Daten und Programme kommuniziert werden, die eindeutig dem Kunden zugeordnet sind, der das gültige verschlüsselte persönliche Passwort bereitstellt; und
eine Computerservice-Steuereinheit (20), die entfernt von den Kundenschnittstelleneinheiten (10) angeordnet ist, wobei die Computerservice-Steuereinheit (20) mit den Kundenschnittstelleneinheiten (10) kommuniziert, und wobei sie so konstruiert ist, dass sie bestimmt, ob es sich bei der Kundenschnittstelleneinheit (10) um eine Einheit einer vorbestimmten Art handelt, und zum Empfangen von Serviceanforderungen von den Kundenschnittstelleneinheiten (10) der vorbestimmten Art, wobei jede Serviceanforderung eine vorbestimmte Art eines verschlüsselten persönlichen Passworts aufweist, das eindeutig einen Kunden identifiziert, der die anfordernde Kundenschnittstelleneinheit (10) nutzt, wobei die Computerservice-Steuereinheit (20) selektiv eine Übertragungsverbindung aufbaut zwischen der gemeinsam genutzten CPU-Steuereinheit (320) des Mehrfachcomputersystems (30) und entsprechenden der Kundenschnittstelleneinheiten (10) nach der Verifizierung eines gültigen verschlüsselten persönlichen Passworts des Kunden, der den Service anfordert.

2. Servicesystem für mehrere Kunden (5) nach Anspruch 1, wobei dieses ferner eine Einrichtung zum Anmelden eines neuen Kunden umfasst.

3. Servicesystem für mehrere Kunden (5) nach Anspruch 1, wobei dieses ferner eine Einrichtung zum Verbinden einer Kundenschnittstelleneinheit (10) mit einem von dem Mehrfachcomputersystem (30) getrennten Computer auf Anforderung des Kunden.

4. Servicesystem für mehrere Kunden (5) nach Anspruch 1, wobei die Kundenschnittstelleneinheiten (10), die Computerservice-Steuereinheit (20) und die gemeinsam genutzte CPU-Steuereinheit (320) über das Internet miteinander kommunizieren.

5. Servicesystem für mehrere Kunden (5) nach Anspruch 1, wobei dieses ferner eine Einrichtung zum Detektieren der vollständigen Serviceausführung für jede Kundenschnittstelleneinheit (10) umfasst, die eine Übertragungsverbindung mit der gemeinsam genutzten Steuereinheit (320) aufgebaut hat.

6. Servicesystem für mehrere Kunden (5) nach Anspruch 5, wobei die gemeinsam genutzte CPU-Steuereinheit (320) eine Einrichtung zum Speichern der letzten Konfiguration der Kundendaten und Programme offline aufweist, wenn die vollständige Serviceausführung detektiert worden ist.

7. Servicesystem für mehrere Kunden (5) nach Anspruch 6, wobei die gemeinsam genutzte CPU-Steuereinheit (320) eine Einrichtung zum Übertragen der letzten Kundenkonfiguration der Kundendaten und Programme in einen Online-Status, wenn ein gültiges Passwort detektiert wird.

8. Servicesystem für mehrere Kunden (5) nach Anspruch 1, wobei dieses ferner eine Einrichtung zur Benachrichtigung des Kunden in Bezug auf mindestens ein Servicezahlungsversäumnis und der Verfügbarkeit neuer Software umfasst.

9. Servicesystem für mehrere Kunden (5) nach Anspruch 1, wobei dieses ferner eine Einrichtung umfasst, die dem Kunden, der Computerservice-Steuereinheit (20) und der gemeinsam genutzten CPU-Steuereinheit (320) Verschlüsselungsschlüsselcodes bereitstellt, so dass die Kommunikation zwischen ihnen geheim erfolgt, und wobei die gemeinsam genutzte CPU-Steuereinheit die Kundendaten und Programm zu keinem Zeitpunkt entsperren kann.

10. Servicesystem für mehrere Kunden (5) nach Anspruch 1, wobei die gemeinsam genutzte CPU-Steuereinheit (320) eine Einrichtung zum Detektieren der vollständigen Serviceausführung für jede Kundenschnittstelleneinheit (10) aufweist, die eine Übertragungsverbindung mit der gemeinsam genutzten CPU-Steuereinheit (320) aufgebaut hat, sowie zum Speichern der letzten Konfiguration der Kundendaten und Programme, wenn die vollständige Serviceausführung detektiert worden ist.

11. Servicesystem für mehrere Kunden (5) nach Anspruch 10, wobei dieses ferner eine Einrichtung zum Anmelden eines neuen Kunden umfasst.

12. Servicesystem für mehrere Kunden (5) nach Anspruch 10, wobei dieses ferner eine Einrichtung zum Verbinden einer Kundenschnittstelleneinheit (10) mit einem vom dem Mehrfachcomputersystem (30) getrennten Computer auf Anforderung durch den Kunden umfasst.

13. Servicesystem für mehrere Kunden (5) nach Anspruch 10, wobei die Kundenschnittstelleneinheiten (10) und die Computerservice-Steuereinheit (20) über das Internet miteinander kommunizieren.

14. Servicesystem für mehrere Kunden (5) nach Anspruch 10, wobei die gemeinsam genutzte CPU-Steuereinheit (320) eine Einrichtung zum Übertragen der letzten Kundenkonfiguration der Kundendaten und Programme in einen Offline-Status umfasst, wenn die vollständige Serviceausführung detektiert worden ist, und wobei die letzte Kundenkonfiguration der Kundendaten und Programme an einen Online-Status übertragen wird, wenn ein gültiges Passwort detektiert wird.

15. Servicesystem für mehrere Kunden (5) nach Anspruch 10, wobei dieses ferner eine Einrichtung zur Benachrichtigung des Kunden in Bezug auf mindestens ein Servicezahlungsversäumnis und die Verfügbarkeit neuer Software umfasst.

16. Servicesystem für mehrere Kunden (5) nach Anspruch 10, wobei dieses ferner eine Einrichtung umfasst, die dem Kunden, der Computerservice-Steuereinheit (20) und der gemeinsam genutzten CPU-Steuereinheit (320) Verschlüsselungsschlüsselcodes bereitstellt, so dass die Kommunikation zwischen ihnen geheim erfolgt, und wobei die gemeinsam genutzte CPU-Steuereinheit die Kundendaten und Programm zu keinem Zeitpunkt entsperren kann.

17. Servicesystem für mehrere Kunden (5) nach Anspruch 10, wobei es sich bei den Zentraleinheiten (330) um Personalcomputer-Zentraleinheiten handelt, die ein Betriebssystem für einen Personalcomputer ausführen.

## Revendications

1. Système de services comprenant plusieurs clients (5), comprenant: une pluralité de types prédéterminés d'unités d'interface client (10), chacune des unités d'interface client (10) étant disposée à distance par rapport aux autres unités d'interface client (10), au moins deux des unités d'interface client (10) étant d'un type différent et chacune des unités d'interface client (10) étant capable de transmettre un mot de passe personnel crypté identifiant un client exploitant l'unité d'interface client (10); un système informatique multiple (30) disposé à distance par rapport aux unités d'interface client (10), le système informatique multiple (30) comprenant: une pluralité d'unités centrales de traitement (330) en mesure d'être partagées sélectivement et traitant sélectivement des données en utilisant une pluralité de programmes de système d'exploitation prédéterminés avec au moins un programme d'application étant réalisé pour fonctionner avec au moins un des programmes de système d'exploitation prédéterminés; une pluralité d'unités de mémoire multiples partagées (340, 350, 360) en communication avec les unités centrales de traitement partagées sélectivement (330), les unités de mémoire multiples partagées (340, 350, 360) mémorisant au moins un programme d'application sélectionnable par chacune des unités d'interface client (10) fournissant un mot de passe personnel crypté valide, et les unités de mémoire multiples partagées (340, 350, 360) mémorisant une pluralité de groupes de programmes et de données de client avec chaque groupe de programmes et de données de client étant accessible seulement par un mot de passe personnel crypté valide moyennant quoi chaque groupe de programmes et de données de client est accessible seulement par le client identifié de manière unique par le mot de passe personnel crypté valide; et une unité de commande de CPU partagée (320) communiquant avec les unités centrales de traitement partagées sélectivement (330) à la demande d'un client exploitant l'une des unités d'interface client situées à distance (10) pour simuler un ordinateur personnel du point de vue du client exploitant l'unité d'interface client située à distance (10) et communiquant des données et des programmes uniquement associés au client fournissant le mot de passe personnel crypté valide; et
une unité de commande de services informatiques (20) situés à distance par rapport aux unités d'interface client (10), l'unité de commande de services informatiques (20) communiquant avec les unités d'interface client (10) et étant conçue pour déterminer si l'unité d'interface client (10) est une d'un type prédéterminé et pour recevoir des demandes de service provenant des unités d'interface client (10) du type prédéterminé avec chaque demande de service comprenant un type prédéterminé de mot de passe personnel crypté identifiant de manière unique un client utilisant l'unité d'interface client demanderesse (10), l'unité de commande de services informatiques (20) établissant sélectivement une communication entre l'unité de commande de CPU partagée (320) du système informatique multiple (30) et des respectives des unités d'interface client (10) à la vérification d'un mot de passe personnel crypté valide du client demandant le service.

2. Système de services comprenant plusieurs clients (5) selon la revendication 1, comprenant en outre des moyens pour inscrire un nouveau client.

3. Système de services comprenant plusieurs clients (5) selon la revendication 1, comprenant en outre des moyens pour connecter une unité d'interface client (10) à un ordinateur séparé du système informatique multiple (30) à la demande par le client.

4. Système de services comprenant plusieurs clients (5) selon la revendication 1, dans lequel les unités d'interface client (10), l'unité de commande de services informatiques (20) et l'unité de commande de CPU partagée (320) communiquent sur Internet.

5. Système de services comprenant plusieurs clients (5) selon la revendication 1, comprenant en outre des moyens pour détecter la fin du service pour chaque unité d'interface client (10) ayant établi une communication avec l'unité de commande de CPU partagée (320).

6. Système de services comprenant plusieurs clients (5) selon la revendication 5, dans lequel l'unité de commande de CPU partagée (320) comprend des moyens pour mémoriser la dernière configuration des programmes et données de client hors ligne quand la fin du service est détectée.

7. Système de services comprenant plusieurs clients (5) selon la revendication 6, dans lequel l'unité de commande de CPU partagée (320) comprend des moyens pour transférer la dernière configuration des programmes et données de client sur l'état en ligne quand un mot de passe valide est détecté.

8. Système de services comprenant plusieurs clients (5) selon la revendication 1, comprenant en outre des moyens pour informer le client sur au moins un parmi le délit de paiement de services et la disponibilité de nouveaux logiciels.

9. Système de services comprenant plusieurs clients (5) selon la revendication 1, comprenant en outre des moyens pour le client, l'unité de commande de services informatiques (20) et l'unité de commande de CPU partagée (320) pour avoir des codes de clé de cryptage de manière que la communication entre eux soit privée et l'unité de commande de CPU partagée (320) ne puisse jamais déverrouiller les programmes de données de client.

10. Système de services comprenant plusieurs clients (5) selon la revendication 6, dans lequel l'unité de commande de CPU partagée (320) comprend des moyens pour détecter la fin du service pour chaque unité d'interface client (10) ayant établi une communication avec l'unité de commande de CPU partagée (320) et pour mémoriser la dernière configuration des programmes et données de client quand la fin du service est détectée

11. Système de services comprenant plusieurs clients (5) selon la revendication 10, comprenant en outre des moyens pour inscrire un nouveau client.

12. Système de services comprenant plusieurs clients (5) selon la revendication 10, comprenant en outre des moyens pour connecter une unité d'interface client (10) à un ordinateur séparé du système informatique multiple (30) à la demande par le client.

13. Système de services comprenant plusieurs clients (5) selon la revendication 10, dans lequel les unités d'interface client (10) et l'unité de commande de services informatiques (20) communiquent sur Internet.

14. Système de services comprenant plusieurs clients (5) selon la revendication 10, dans lequel l'unité de commande de CPU partagée (320) comprend des moyens pour transférer la dernière configuration des programmes et données de client sur l'état hors ligne quand la fin du service est détectée et transférer la dernière configuration des programmes et données de client sur l'état en ligne quand un mot de passe valide est détecté.

15. Système de services comprenant plusieurs clients (5) selon la revendication 10, comprenant en outre des moyens pour informer le client sur au moins un parmi le délit de paiement de services et la disponibilité de nouveaux logiciels.

16. Système de services comprenant plusieurs clients (5) selon la revendication 10, comprenant en outre des moyens pour le client, l'unité de commande de services informatiques (20) et l'unité de commande de CPU partagée (320) pour avoir des codes de clé de cryptage de manière que la communication entre eux soit privée et l'unité de commande de CPU partagée (320) ne puisse jamais déverrouiller les programmes de données de client.

17. Système de services comprenant plusieurs clients (5) selon la revendication 10, dans lequel les unités centrales de traitement (330) sont des unités centrales de traitement d'ordinateur personnel faisant fonctionner un système d'exploitation d'ordinateur personnel.
